(19) Europäisches Patentamt
European Patent Office
Office européen des brevets

(11) **EP 2 701 039 A2**

(12) **EUROPEAN PATENT APPLICATION**
published in accordance with Art. 153(4) EPC

(43) Date of publication:
**26.02.2014 Bulletin 2014/09**

(21) Application number: **12773820.1**

(22) Date of filing: **10.04.2012**

(51) Int Cl.:
**G06F 3/033** (2013.01)          **G05G 9/04** (2006.01)

(86) International application number:
**PCT/KR2012/002731**

(87) International publication number:
**WO 2012/144761 (26.10.2012 Gazette 2012/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.04.2011 KR 20110037405
22.12.2011 KR 20110140208**

(71) Applicant: **Kim, Cheolwoo
Seoul 150-870 (KR)**

(72) Inventor: **Kim, Cheolwoo
Seoul 150-870 (KR)**

(74) Representative: **Hocking, Adrian Niall et al
Albright Patents LLP
Eagle Tower
Montpellier Drive
Cheltenham
Gloucestershire GL50 1TA (GB)**

(54) **UNIVERSAL MOTION CONTROLLER IN WHICH A 3D MOVEMENT AND A ROTATIONAL INPUT ARE POSSIBLE**

(57)     The present invention relates to a universal motion controller in which a 3D movement and a rotational input are possible, and more particularly to a universal motion controller in which the rotation of a controller is recognized using at least one sensor detecting the positional movement of the controller, and which enables the rotation of a selected object in a 3D space corresponding to a recognized angle. By using the controller, which enables the three-dimensional input of a controller wheel corresponding to the value of a z-axis and the rotational angle of the object or of the coordinate axis, a control signal for controlling various machine devices can be generated. According to the present invention, the universal motion controller, in which a 3D movement and a rotational input are possible, comprises: a first motion-detection unit installed in one side of the lower surface of the controller for generating x-axis and y-axis motion signals in a 2D plane for a machine device; a second motion-detection unit installed in another side of the lower surface of the controller for generating a rotation signal in a 2D plane in a machine device in conjunction with the motion signals of the first motion-detection unit; at least one wheel operation unit for generating an operation signal capable of controlling at least one component included in the machine device; a button a for generating a first selection signal for performing a first function selected by a user; and a button b for generating a second selection signal for performing a second function selected by the user.

[Fig.2]

## Description

Technical Field

The present invention is related to the universal motion controller capable of 3-dimensional move and rotation inputting, which can recognize rotation of the controller using more than one sensor or wheel encoder, etc. sensing the position move of the controller, rotate the object selected in 3-dimensional space in response to the recognized angle, and generate control signals to control various mechanical devices using a controller that enables 3-dimensional inputting of controller wheel's input in response to the Z-axis value, the rotation angle of object or coordinate axis.

Background Technology

In the use of computers, various kinds of inputting devices are required and in existence. The most representative inputting device among them is the mouse. The mouse is advice indicating the position on a display screen in the computer system, which may be largely divided into ball mouse operating by ball's rolling action and optical mouse operated by sensing light, and also into cable mouse and wireless means mouse depending on the presence status of line.

Mouse generally consists of two buttons and a wheel on the top side, where two buttons are used to select or execute a configuration at the relevant position when the mouse pointer is positioned at a particular place, while the wheel is used to scroll the displayed information. Also, the ball or photo sensor sensing move of the mouse is used to move the position of the mouse pointer positioned in the screen, where the move of such mouse pointer is realized on a 2-dimensional plane.

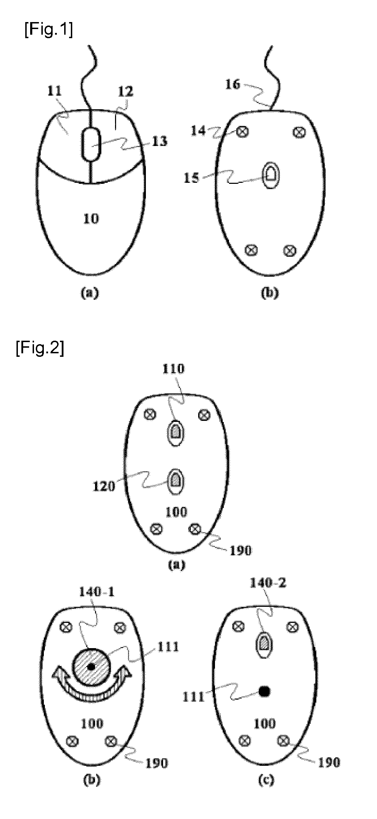

Figure 1 is a configuration diagram showing a mouse according to the conventional technology. As schematically shown in Fig.1(a), two inputting button part(11, 12) is equipped on one side of the top face of the conventional mouse (10) and the wheel drive part(13) on the other side. The inputting button part(11, 12) is used to select the place to position the mouse pointer on the displayed screen, execute the relevant program, or produce an input signal to view additional information, while the wheel drive part is used to scroll the displayed screen.

Meanwhile, as shown in Fig.1(b), more than one housing fixing part(14) is equipped to combine the housing as an external shape of the mouse(10) on the bottom face of a conventional mouse(10), the action sensing part(15) to sense move of the mouse(10) by the user, and the interface part(16) to transmit the input signals generated at the mouse (10) to an external instrument.

As shown in Fig. 1(b), the action sensing part(15) of the conventional mouse(10) may be configured as a photo interrupter for reflection or by using the ball. Such mouse equipped with a photo interrupter is called an optical mouse, while the mouse configured by equipping with a ball is called a ball mouse.

Although no particular problems occur with a conventional mouse in document preparation, operation of web browser action, etc., there is a problem where rotation of a displayed object or 3-dimensional inputting is difficult to execute in graphic works.

Meanwhile, since rotation of a displayed object or 3-dimensional inputting of the relevant object, etc. are conducted via software in a program for graphics, there is a limitation in being used as a 3-dimensional graphic tool.

Also, while the conventional mouse can control the pointer movement on a 2-dimensional plane of X-axis and Y-axis, there is a problem where movement in 3-dimensional space displayed in 2-dimensional screen cannot be controlled. Therefore, when 3D graphic works, etc. are conducted, 3D graphic works, etc. could be conducted by changing the movement of the 2-dimensional mouse to the 3-dimension with the use of a separate software.

Furthermore, although the inputting devices applicable to conventional computers may include mouse, joystick, tablet, etc., such inputting devices could be used in control of computer pointers, games or graphic works, etc., on a limited basis.

Such conventional mouse could be used in computers on a limited basis, and has technical problems where application is difficult in some 3D graphic works. Also, while the use may be simple, there is a problem of being limited for the use as an inputting device to control mechanical devices in broad industrial areas.

Detailed description of Invention

## Technical Problem

The present invention devised to solve conventional technology as above has the purpose of making rotate the object positioned in a displayed screen by being equipped with more than one position movement sensors(pointing device), particularly photo detectors sensing the controller movement while being positioned at the controller bottom and calculating the rotation angle of the controller moved by the user.

In addition, the present invention has the purpose of plane rotation of the object in 3D space on the screen with reference to the center axis parallel to Z-axis or at rotating the object with the lateral axis parallel to X, Y plane while being orthogonal to the longitudinal axis of the line passing through two pointers of at the point designated by the controller pointer in 3D space.

In addition, the present invention has another purpose to enable execution of control of mechanical device used in various industrial areas by being equipped with configuration capable of measuring the rotation angle.

In addition, the present invention has another purpose to enable simple inputting of control commands of a mechanical device used in various industrial areas by the use, since the invention can be configures so as to allow action by user's one hand or action by user's both hands according to the user's convenience.

In addition, the present invention has another purpose to enable generation of control signals that can provide not only movement in 2D plane of X-axis and Y-axis of the pointer existing on 3D coordinates but also 3D movement of Z-axis.

In addition, the present invention has another purpose to enable generation of control signals for not only 2D movement but also rotation of the pointing device using more than one optical pointing devices.

In addition, the present invention has another purpose to enable execution of 2D plane movement and rotation of the controller pointer using coordinate values inputted through more than one of two photo sensors positioned at the controller bottom, and movement to 3D(Z-axis) of the controller pointer using the wheel equipped in one side of the controller top.

In addition, the present invention has another purpose to apply to the controller for control of unmanned camera manipulated remotely.

In addition, the present invention has another purpose to apply to actions of astronomical telescope such as movement, magnification, reduction, etc., or firing adjustment, etc. of artillery as military equipment in the national defense industry.

In addition, the present invention has another purpose to be useful in rendering operation of generating 3D objects through 3D graphic software using 2D and 3D inputs of the controller.

In addition, the present invention has another purpose to be used as a medical image control device to change position, rotation and slope of 3D data when medical 3D images such as X-ray CT 3-dimensional image filming, MRI, ultrasonic filming, etc. are displayed.

In addition, the present invention has another purpose to be used in simulation of automobile control devices or airplane control devices using 2D and 3D inputs of the controller.

In addition, the present invention has another purpose to enable generation of rotation command signals of mechanical devices used in various industry areas by detecting the amount of rotation of the controller rotating around rotation axis using a wheel encoder, etc.

Means for Solving the Problem

In the controller containing two action sensing parts to activate the mechanical devices, the above purpose of the present invention is achieved by the universal motion controller configured with inclusion of the first action sensing part equipped at one side of the bottom face of the above controller to generate X-axis and Y-axis action signals of 2D plane in the above mechanical device, and more than one wheel drive part to generate action signals capable of controlling more than one components included in the above mechanical device, and the button part "a" to generate the first selection signal executing the first function selected by the user, and the button part "b" to generate the second selection signal executing the second function selected by the above user.

In addition, in the controller containing one rotation sensing part to activate the mechanical device, another purpose of the present invention is achieved by the universal motion controller configured with the inclusion of the rotation axis positioned at one side of the bottom face of the above controller to enable rotation of the above controller by connection through vertical axis with the plane where the above controller is positioned, and the rotation sensing part to generate rotation signals of 2D plane in the above mechanical device by detecting the amount of rotation of the above controller while being positioned at the bottom face of the above controller, and more than one wheel drive parts to generate action signals capable of controlling more than one components contained in the above mechanical device, and the button part "a" to generate the first selection signal executing the first function selected by the user, and the button part "b" to generate the second selection signals executing the second function selected by the above user.

In addition, in automobiles using the controller of the claim 10, another purpose of the present invention is achieved by the universal motion controller for automobile driving control configured with the inclusion of the rotation axis generating steering action signals to rotate the steering part of the above automobiles using the above amount of rotation after measuring the amount of rotation of the above controller, and the wheel drive part "c" generating on/off action signals for on/off of the power of the above automobile according to rotating directions, and the wheel drive part "d" generating advance action signals or stop action signals to activate accelerator or break system of the above automobile according to rotating directions, and the wheel drive part "e" generating windshield wiper action signals to control one of action or action speed of the above automobile's windshield wiper, and the wheel drive part "f" generating geared transmission signals to enable selection of geared transmission of the above automobile according to rotating directions, and the button part "a" to generate left direction signals to activate the left direction indicator lamp of the above automobile, and the button part "b" to generate the right direction signals to activate the right direction indicator lamp of the above automobile.

In addition, in airplanes using the controller of the claim 10, another purpose of the present invention is achieved by the universal motion controller for airplane driving control configured with the inclusion of the rotation axis generating air box action signals to control the air box of the above airplanes using the above amount of rotation after measuring the amount of rotation of the above controller, and the wheel drive part "c" generating vertical tail wing action signals to activate the vertical tail wing of the above airplanes according to rotating directions, and the wheel drive part "d" generating output increase or output reduction signals to increase or decrease outputs of the above airplanes according to rotating directions, and the wheel drive part "e" generating flap action signals to activate flap of the above airplanes according to rotating directions, and the wheel drive part "f" generating horizontal tail wing action signals to activate the horizontal tail wing of the above airplanes according to rotating directions.

In addition, in helicopters using the controller of the claim 1, another purpose of the present invention is achieved by the universal motion controller for helicopter driving control configured with the inclusion of the action sensing part generating the first cyclic action signals to advance or back up the above helicopter by detecting position movement of the above controller when the above controller moves forward or backward on the 2D of X-axis and Y-axis, and the second action sensing part generating anti-torque rotor action signals to control the rotation of anti-torque of the above helicopter by detecting rotation movement of the above controller using position information of the first action sensing part when the above controller rotates in 2D of X-axis, Y-axis, and the wheel drive part "d" generating output action signals to increase or decrease outputs of the above helicopter according to rotating directions, and the wheel drive part "f" generating collective action signals to ascend or descend the above helicopter according to rotating directions.

In addition, in excavators using the controller of the claim 10, another purpose of the present invention is achieved by the universal motion controller for excavator action control configured with the inclusion of the rotation sensing part generating swing action signals to rotate the swing part of the above excavator to the left or to the right using the above amount of rotation after measuring the amount of rotation of the above controller. and the wheel drive part "b" generating arm action signals to execute actions of stretching or pulling arm of the above excavator according to rotating directions, and the wheel drive art "d" generating bucket action signals to rotate the bucket of the above excavator upward or downward according to the boom of rotating directions, and the wheel drive part "f" generating boom action signals to rotate the above excavator upward or downward according to the rotting directions.

In addition, in filming devices using the controller of the claim 1, another purpose of the present invention is achieved by the universal motion controller for action control of the filming device configured with inclusion of the first action sensing part generating drive action signals to advance or back up the drive part of the above filming device by detecting position movement of the above controller when the above controller moves forward or backward in 2D of X-axis, Y-axis, and the second action sensing part generating left or right rotation action signals to rotate the camera of the above filming device by detecting rotation movement of the above controller using position information of the first action sensing part when the above controller rotates in 2D of X-axis, Y-axis, and the wheel drive part "c" generating zoom in or zoom out action signals to magnify or shrink the subject filmed by the above filming device according to rotating directions, and the wheel drive part "d" generating upper/lower rotation action signals to rotate the above camera upward or downward according to rotating directions, and the wheel drive part "f" generating upward/downward movement action signals to raise or lower the above camera according to rotating directions, and the button part "a" generating shutter action signals to activate the shutter of the above filming device.

In addition, in microscopes using the controller of the claim 1, another purpose of the present invention is achieved by the universal motion controller for action control of microscopes configured with the inclusion of the first action sensing part generating drive action signals to advance or back up the observation subject placed on a stage of the above microscopes by detecting position movement of the above controller when the above controller moves forward or backward in 2D of X-axis, Y-axis, and the second action sensing part generating left or right rotation action signals to rotate the observation subject placed on a stage of the above microscopes by detecting rotation movement of the above controller using position information of the first action sensing part when the above controller rotates in 2D of X=axis, Y-axis, and the wheel drive part "c" generating exchange signals of the objective lens to rotate the objective lens turn table of the above microscope according to rotating directions, and the wheel drive part "d" generating reflection mirror rotation action signals to rotate the reflection mirror of above microscope upward or downward according to rotating directions, and the wheel drive part "e" generating fine focus knob action signals to adjust the fine focus knob for focus adjustment of the objective lens set in the above microscope according to rotating directions, and the wheel drive part "f" generating coarse focus knob action signals to adjust coarse focus knob for raising or lowering one of the body tube of the above microscope or the above stage according to rotating directions.

In addition, in 3D action controllers using the controller of the claim 1, another purpose of the present invention is achieved by the universal motion controller for action control of the 3D action controller configured with the inclusion of the first action sensing part generating forward/backward action signals of the cursor displayed in response to movement of the above 3D action controller by detecting position movement of the above controller when the above controller moves forward or backward in 2D plane of X-axis, Y-axis, and the second action sensing part generating Z-axis rotation signals to rotate the 3D graphic of the place with the above cursor positioned in the above displayed screen around Z-axis by detecting rotation movement of the above controller using position information of the first action sensing part, and the wheel drive part "a" generating Y-axis slope signals to rotate around Y-axis 3D graphic at the place with the above cursor positioned in the displayed screen, and the second wheel drive part generating Z-axis movement signals to move 3D graphic at the place with the above cursor positioned in the above displayed screen according to rotating directions, and the wheel drive part "c" generating zoom in or zoom out signals to magnify or shrink the above displayed screen according to rotating directions, and the wheel drive part d" generating X-axis slope signals to rotate around X-axis 3D graphic at the place with the above cursor positioned in the above displayed screen according to rotating directions.

Effects of Invention

Therefore, the universal motion controller capable of 3D movement and rotation inputting of the present invention is equipped with more than one position movement sensors, particularly photo sensor, positioned at the controller bottom to sense the controller movement, and has the effect that enables easy rotation of the object positioned in the displayed screen by calculating rotation angles of the controller moved by the user.

In addition, the present invention has another effect of being able to be used easily in software such as 3D architecture design or animation, etc., since objects in 3D space in the screen may be rotated with reference to the center axis parallel to Z-axis or with the lateral axis parallel to X, Y plane while being orthogonal to the longitudinal axis which is the line passing two pointers of the controller at the point designated by the controller in 3D space.

In addition, the present invention is designed to be suited to the user's hand and has another effect where control commands of the mechanical device used in a variety of industry areas may be easily inputted with the user's hand and fingers.

In addition, the present invention may be applied to allow inputting multitude of control signals used in various industry areas so as to have another effect of being interchangeable in mechanical devices executing mutually different control commands.

In addition, the present invention is equipped with the configuration allowing measurement of rotation angles so as to have another effect of being able to execute controls of mechanical devices used in various industry areas.

In addition, the present invention may be configured to allow action by the user's one hand, or with the use of both hands depending on the user's convenience so as to have another effect where the user may be able to conveniently control commands of mechanical devices used in various industry areas.

In addition, the present invention has another effect of being able to generate control commands capable of providing not only movement in 2D plane of X-axis and Y-axis of the pointer existing in 3D coordinates but also 3D movement of Z-axis.

In addition, the present invention has another effect of being able to generate control signals for not only 2D movement but also rotation of the pointing device using two optical pointing devices.

In addition, the present invention has another effect to execute 2D plane movement and rotation of the controller pointer using the coordinate values inputted through more than one of the photo sensors positioned at the controller bottom and to enable 3D(Z-axis) movement of the controller point using the wheel equipped in one side of the controller top face.

In addition, the present invention has another effect of being able to remotely adjust direction and angle of the camera with application to the controller for adjustment of unmanned cameras.

In addition, the present invention has another effect of being able to smoothly operate various adjustment instruments with application to actions of astronomical telescopes such as movement, magnification, reduction, etc. firing adjustment of artillery as military combat equipment in national defense industry by using 2D and 3D inputs of the controller.

In addition, the present invention has another effect of being able to be useful in rendering operation generating 3D objects employing 3D graphic software with the use of 2D and 3D inputs of the controller.

In addition, the present invention has another effect of being able to be used as a medical image control device that changes position, rotation and slope of 3D data when medical 3D images such as

X-ray CT 3D image filming, MRI, ultrasonic filming, etc. are displayed at al clinics.

In addition, the present invention has another effect of being able to move and rotate the objects in 3D space, easily control front and rear, left and right scrolls in the case of conducting 3D graphic operations.

In addition, the present invention may be used as an automobile control device or an airplane control device using 2D and 3D inputs of the controller so as to have another effect of being able to replace the existing complicated control equipment.

In addition, the present invention has another effect of being able to generate rotation command signals of mechanical devices used in a variety of industry areas by detecting the amount of rotation of the controller rotating around the rotation axis.

Brief Description of Drawings

Fig.1 is a configuration diagram showing mouse according to conventional technology.

Fig.2 is an outside view showing an implementation example for the lower part according to the present invention.

Fig.3 is an outside view showing an implementation example for the upper part according to the present invention.

Fig.4 is a configuration diagram of universal motion controller equipped with two action sensing parts among the lower part implementation examples of the present invention.

Fig. 5 is a configuration diagram of universal motion controller equipped with rotation sensing part among the lower part implementation examples of the present invention.

Fig.6 is an illustration drawing showing an implementation example of 3D rotation according to the present invention.

Fig. 7 is an illustration drawing showing another implementation example of 3D rotation according to the present invention.

Fig. 8 is a concept diagram to generate 3D control signals with the mouse using universal motion controller according to the present invention.

Fig.9 is a configuration diagram to generate control signals for automobiles using universal motion controller according to the present invention.

Fig. 10 is a configuration diagram to generate control signals for airplanes using universal motion controller according to the present invention.

Fig.11 is a configuration diagram to generate control signals for helicopters using universal motion controller according to the present invention.

Fig. 12 is a configuration diagram to generate control signals for excavators using universal motion controller according to the present invention.

Fig. 13 is a configuration diagram to generate control signals for filming devices using universal motion controller according to the present invention.

Fig. 14 is a configuration diagram to generate control signals for microscopes using universal motion controller according to the present invention.

The Forms for Implementation of Invention

The terms and the words used in the present specification and patent claims shall not be limited to ordinary or dictionary meanings for interpretation, and based on the principle that interpretation shall be made as the meaning and the concept in accordance with the technical ideas of the present invention based on the principle that the inventor may appropriately define the concept of terms to describe the inventor's own invention by the best method.

Therefore, the configurations shown by a diagram in the implementation examples and drawings recorded in the present specification shall be only a desirable implementation example and not represent all technical ideas of the present invention, and hence it shall be understood that there may be a variety of equivalents and modified examples that can replace these at the present time of filing.

Desirable implementation examples shall be described below in detail in reference to the attached drawings.

Figure 2 is an outside view showing an implementation example of the lower part according to the present invention. As shown in Fig.2, the bottom face of the universal motion controller(100) is configured in a pad shape so as to be placed on the pad floor for use.

Fig.2(a) is the universal motion controller(100) using two action sensing parts of the first action sensing part (110) and the second action sensing part(120), while (b) is the universal motion controller(100) using the wheel encoder part(140-1) as one of the rotation sensing parts, and (c) is the universal motion controller using the other action sensing part(140-2) of the rotation sensing parts.

As shown in (a), the first action sensing part(110) and the second action sensing part(10) are equipped in the bottom face of the universal motion controller(100), the latter being able to detect motion moved on the pad. To detect the motion moved on the pad, it is desirable to use photo interrupter for reflection as the first and the second action sensing parts(110, 120), where the reflective photo interrupter is characterized as being identical with an optical pointing device used generally in mouse.

Also, the first and the second action sensing parts(110, 120) are removed by as much as the given length on the bottom face of the universal motion controller to be equipped on a straight line. The first action sensing part(110) may sense motion of the universal motion controller(100) moving in 2D plane of X-axis, Y-axis, and generate the coordinate values detected by sensing such motion into the action signals for left right movement or forward/backward movement of the mechanical device(200). In the meanwhile, the second action sensing part(120) may generate the calculated angles into the rotation signals by calculating the moved distance of the second action sensing part(120) as the rotation angle with the coordinate of the first action sensing part(110) as the axis.

Namely, when the first coordinate values for the place where the universal controller(100) recognized by the first and the second action sensing parts(110, 120) was positioned before rotation were (x1, y1) and (x2, y2), respectively, while the second coordinate values of the place where the universal motion controller(100) recognized by the first and the second action sensing parts rotated were (x3, y3) and(x4, y4), respectively, the universal controller(100) may be calculated to have executed movement by the rotation angle ($\Delta\theta$) according to the following mathematical equation.

The first coordinate values: the first action sensing part(x1, y1), the second action sensing part(x2, y2)

The second coordinate values: the first action sensing part(x3, y3), the second action sensing part(x4, y4)

When $\Delta x1=x1-x2$, $\Delta y1=y1-y2$, $\Delta x2=x3-x4$, $\Delta y2=y3-y4$.

$\theta1=\arctan(\Delta y1/\Delta x1)$, $\theta2=\arctan(\Delta y2/\Delta x2)$, and

$\Delta\theta = \theta2-\theta1$

Meanwhile, the wheel encoder part(140-1) as one of the rotation sensing parts(140) shown in Fig.2(b) is equipped on the bottom face of the universal motion controller(110), and the rotation axis(111) is equipped in the center of the wheel encoder part(140-1) so as to be able to detect the motion of rotating around the rotation axis(111) of the universal motion controller(100) on the pad(bottom face).

The rotation axis(111) is configured to be able to rotate by combination through a mutual axis with the wheel encoder part(140-1) equipped on the bottom face of the universal motion controller(100) and the bottom face where the universal motion controller(1 00) is positioned.

Meanwhile, the wheel encoder part(140-1) to detect the motion rotated on the pad(bottom face) is configured with the inclusion of the wheel action part(not shown) to allow rotation of the universal motion controller(100) around the rotation axis(111) in 2D plane, and the encoder(not shown) capable of measuring rotation angles of the universal motion controller (111) by sensing the amount of rotation of the wheel action part. For the encoder, the use of one of optical, variable resistance-type or mechanical encoders is desirable.

The encoder(not shown) senses the amount of rotation of the wheel action part rotating in 2D plane with the rotation axis(111) as the axis, and may generate the sensed amounts of rotation into rotation signals. Therefore, the wheel encoder part (140-1) may measure the amount of rotation of the universal motion controller(100) and use the generated rotation signals as the rotation angles of the mechanical device(200).

Meanwhile, the action sensing part(140-2) as the other one of the rotation sensing parts(140) equipped in Fig. 2(c) along with the rotation axis(111) are equipped on the bottom face of the universal motion controller(100), while the universal motion controller(100) can detect the motion rotated on the pad(bottom face). For the action sensing part (140-2) to detect the motion rotated on the pad(bottom face), the use of photo interrupter for reflection is desirable, the latter being characterized by being identical with the optical pointing device employed generally in the mouse.

The rotation axis(111) is configured to be combined through a mutual axis with the bottom face with the bottom face of universal motion controller(100) and the universal motion controller(100) positioned so as to be able to rotate.

In addition, the action sensing part(140-2) and the rotation axis(111) are removed by the given length from the bottom face of the universal motion controller(100) to be equipped on a straight line. The action sensing part(140-2) may sense the rotation motion of the universal motion control(100) moved in 2D plane of X-axis, Y-axis with the rotation axis(111) as the axis, and sense such motion to generate the detected coordinate values into rotation signals. Therefore, the action sensing part(140-2) may generate the calculated angles into rotation signals by calculating the rotation distance as the rotation angle.

In the bottom face shown in Figs.2 (a), (b) and (c) more than one housing fixing part(not shown) can be equipped to fix the housing of the universal motion controller(100), and the housing of the latter may be combined by other combination devices.

More than one vibration prevention parts(190) are equipped on the bottom face of the universal motion controller (100), and it is desirable to be formed as an elastic body to absorb vibration of the mechanical device(200). The vibration prevention part(190) may be formed as a material with high friction coefficient not only to absorb vibration of the mechanical device(200) but also to prevent sliding from the pad equipped with the universal motion controller (100).

In addition, the bottom face with the universal motion controller(100) positioned is formed as a metallic material, and fine motions of the universal motion controller(100) due to vibration of the mechanical device(200) may be prevented as the universal motion controller(100) is tightly attached to the bottom face consisting of metallic material by containing a magnet(not shown) inside.

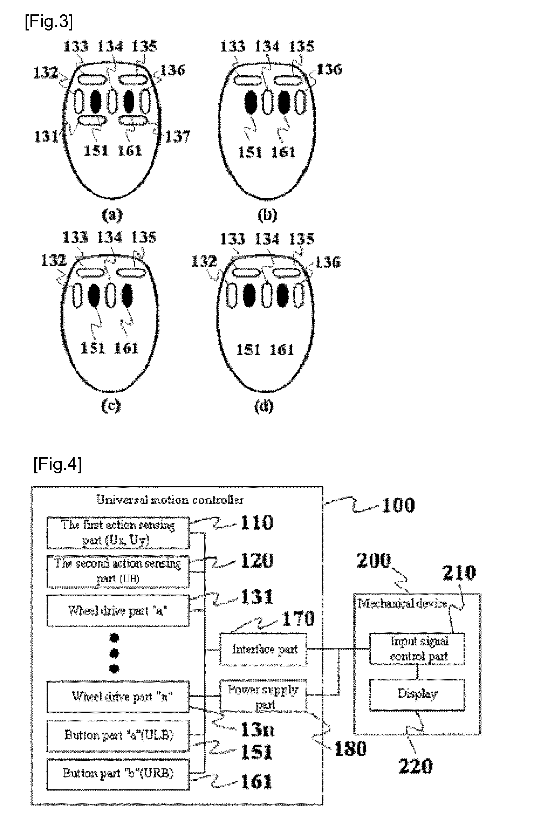

Figure 3 is an outside view showing an implementation example of the upper part according to the present invention. As shown in Fig.3, the universal motion controller(100) is formed with an outside shape allowing to be grasped with the user's hand.

The implementation example of (a) is equipped with two buttons of the button part "a"(151) and the button part "b"(161), with left, right, top and bottom sides of each button part(151, 161) being equipped with the wheel drive part. The wheel drive part may be configured with the wheel drive part "a"(131), the wheel drive part "b"(132), the wheel drive part "c"(133), the wheel drive part "d"(134), the wheel drive part "e"(135), the wheel drive part "f"(136) and the wheel drive part "g"(137).

Meanwhile, it is desirable to configure the wheel drive part "b"(132), the wheel drive part "d"(134) and the wheel drive part "f"(136) to execute more than one function among forward/backward movement-related function, vertical movement-related function or rotation-related function of the mechanical device, while it is desirable to configure the wheel drive part "c"(133), the wheel drive part "d"(135) and the wheel drive part "f"(137) to execute more than one function among left/right movement-related function or rotation-related function. Furthermore, each wheel drive part (131, ..., 137) may be replaced with a button or a wheel button(not shown), and the configuration position and number of units may be changed according to characteristics of the mechanical device and user convenience.

Each wheel drive part may be configured at a selected place for use depending on the convenience of the users of the applicable mechanical device or computer, and such examples may be shown as in Figs. 2(b), (c), (d).

It is desirable that the wheel drive part "a" through the wheel drive "g"(131,....137) generate action signals to control each motion of the mechanical device(200) according to the rotation directions, and changes of the signals generated to control other configurations of the mechanical device(200) according to characteristics of the several kinds of mechanical devices(200).

Furthermore, the wheel drive parts "a" through "g"(131,....137) may be changed to a button or a wheel button (not shown) for use depending on user convenience.

In addition, the button part "a"(151) and the button part "b"(161) may be used to generate action signals for actions selected in mechanical devices and computers.

Figure 4 is a configuration diagram of the universal motion controller equipped with two action sensing parts among the lower part implementation examples of the present invention. As shown in Fig. 4, it is desirable that the first action sensing part(110) and the second action sensing part(120) operate as recorded in Fig.2(a), while the wheel drive part "a"(131) through the wheel drive part "n"(13n), the button part "a"(151) and the button part "b"(161) operate as recorded in Fig.3.

The universal motion controller(100) includes the interface part(170) to transmit the command signals generated from each configuration part to the external mechanical device (200) and the power supply part(180) to supply power to the universal motion controller (100).

It is desirable that the interface part(170) uses one of the cable or wireless means communications. When the interface part(170) is configured as cable, the power supply part(180) may be supplied power through the external mechanical device(200) connected to the interface part(170), whereas the power supply part(180) may be supplied power through the battery (not shown) equipped inside the universal motion controller(100) when the interface part is configured as wireless means.

The interface part (170) transmits the command signals generated in each configuration part of the universal motion controller to the input signal control part(210) equipped in the mechanical device(200) using either one of cable or wireless means communication, and the contents processed by the input signal control part(210) may be outputted for the user.

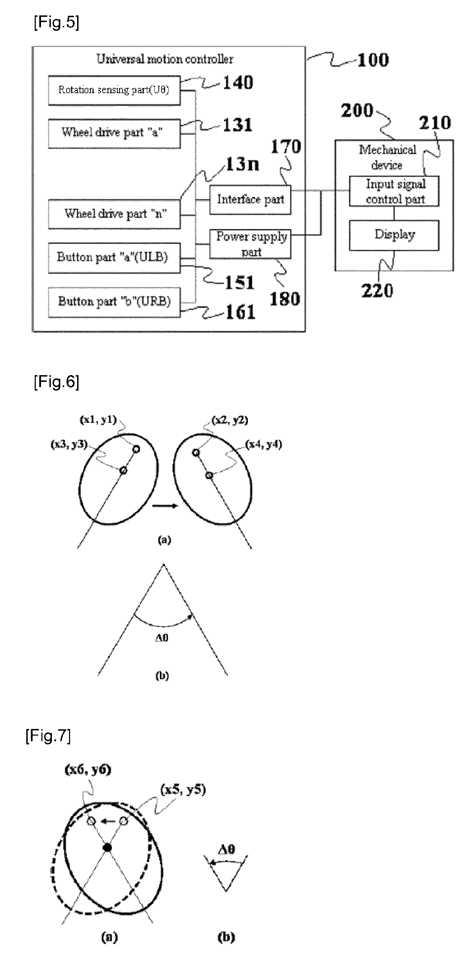

Figure 5 is a configuration diagram of the universal motion controller equipped with the rotation sensing part among the lower part implementation examples of the present invention. As shown in Fig.5, it is desirable that the rotation sensing part(140) is formed as one of the configurations in Figs. 2(b) or (c), with other configurations being identical with the remaining configurations excluding the first action sensing part(110) and the second action sensing part(120)among the contents recorded in Fig.4.

Figure 6 is an illustration drawing showing an implementation example of 3D rotation according to the present invention. As shown in Fig. 6(a), the universal motion controller recognizes the first coordinate values of the place positioned before rotation at the first action sensing part and the second action sensing part through two action sensing parts as in Fig.2(a). Also, the second coordinate values at the place with the universal motion control rotated are recognized at the first action sensing part and the second action sensing part.

Now that the first coordinate values at the place for the universal motion controller recognized by the first and the second action sensing parts to be positioned at are (x1, y1), (x2, y2) while the second coordinate values at the place for the universal motion controller recognized by the first and the second action sensing parts to have rotated at are (x3, y3),(x4, y4), the universal motion controller may be calculated as having executed the movement by the same rotation angle ($\Delta\theta$) as in Fig.6(b).

Such calculation of rotation angles of the universal motion controller may be made using the first coordinate values and the second coordinate values, from the following mathematical equations.

The first coordinate values: the first action sensing part(x1, y1); the second action sensing part(x2, y2)

The second coordinate values: the first action sensing part(x3, y3); the second action sensing part(x4, y4)

$$\text{If we let}\Delta x1=x1-x2, \Delta y1=y1-y2, \Delta x2=x3-x4,\Delta y2=y3-y4,$$

$$\theta1=\arctan(\Delta y1/\Delta x1), \theta2=\arctan(\Delta y2/\Delta x2),$$

and

$$\Delta\theta=\theta2-\theta1$$

Figure 7 is an illustration drawing showing another implementation example of 3D rotation according to the present invention. As shown in Fig.7(a), the universal motion controller recognizes the third coordinate values of the place positioned before rotation at the action sensing part through one action sensing part as in Fig.2(c). Also, the fourth coordinate values at the place for the universal motion controller to have rotated at are recognized by the action sensing part.

Now that the third coordinate values at the place for the universal motion controller recognized by the first and the second action sensing parts to be positioned at are (x5, y5) while the fourth coordinate values at the place for the universal motion controller recognized by the action sensing part to have rotated at are (x6, y6), the universal motion controller may be calculated as having executed the movement by the same rotation angle ($\Delta\theta$) as in Fig.7(b).

Such calculation of rotation angles of the universal motion controller may be made using the third coordinate values and the fourth coordinate values, from the following mathematical equations

The third coordinate values: the action sensing part(x5, y5), the rotation axis(x6, y6)

The fourth coordinate values: the action sensing part(x7, y7), the rotation axis(x6, y6)

$$\text{If we let } \Delta x1=x5-x6, \Delta y1=y5-y6, \Delta x2=x7-x6, \Delta y2=y7-y6,$$

$$\theta1=\arctan(\Delta y1/\Delta x1), \theta2=\arctan(\Delta y2/\Delta x2),$$

and

$$\Delta\theta=\theta2-\theta1$$

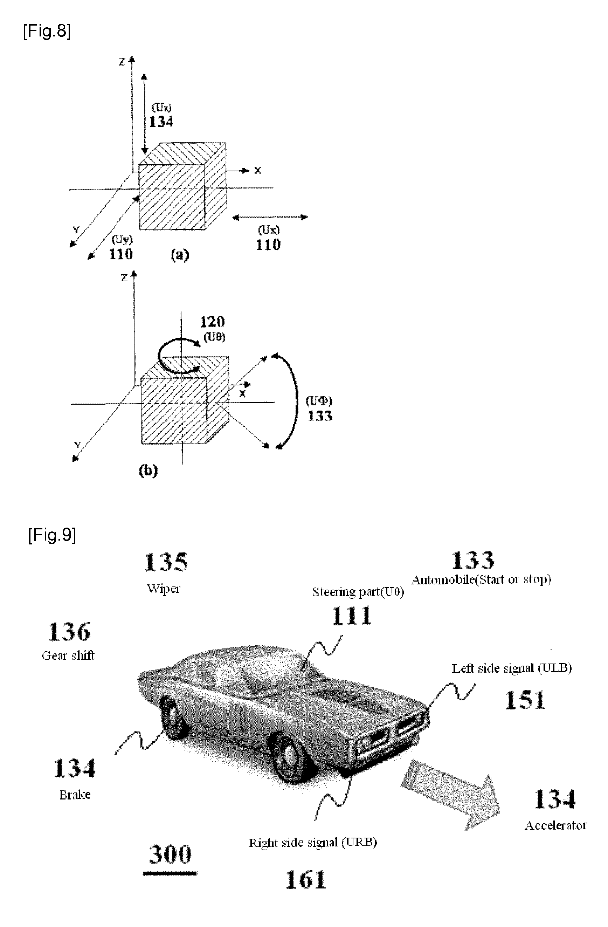

Figure 8 is a concept diagram to generate 3D control signals at the 3D action controller using the universal motion controller according to the present invention. As shown in Fig.8(a), it is desirable that the universal motion controller (100) to generate 3D control signals is configured by using the implementation examples of the upper part and the lower part shown in Figs. 2(a) and 3(b).

The first action sensing part(110) detects motion of the universal motion controller moving in 2D plane(pad) of X-axis, Y-axis and generates X-axis action signal(Ux) for X-axis movement or Y-axis action signal(Uy) for Y-axis movement of 3D graphic.

As shown in Fig.8(b), when the universal motion controller (100) rotates on the X-,Y-axis plane, it may detect rotation movement of the universal motion controller(100) using the position movement information of the first action sensing part(110) and the second action sensing part(120), and generate rotation signals (Uθ) capable of rotating 3D graphic according to the detected rotation movement.

The wheel drive part "c"(133) generates Y-axis slope signals(UΦ) to rotate the 3D graphic at the place with the cursor positioned in the screen displayed according to rotating directions around Y-axis, while the wheel drive part "d"(134) generates Z-axis movement signals(Uz) to move the 3D graphic to the upper or the lower side in Z-axis direction according to rotating directions.

The wheel drive part "e" generates zoom in or zoom out signals to magnify or shrink the screen displayed according to rotating directions, while the wheel drive part "f" generates X-axis slope signals to rotate the 3D graphic at the place with the above cursor positioned in the screen displayed according to rotating directions around the X-axis.

In addition, when the 3D action controller is used in 2D graphic although not shown in Fig.8, the wheel drive part "c"(133) generates left/right scroll signals to scroll the screen displayed(220) according to rotating directions to left or right, while the wheel drive part "d" (134) generates up/down scroll signals to scroll the screen displayed (220) according to rotating directions upward or downward.

The wheel drive part "e"(135) generates left/right menu movement signals to move the menu selection in the screen displayed(220) according to rotating directions to left or right side, while the wheel drive part "f"(136) generates up/down menu movement signals to move the menu selection in the screen displayed(220) upward or downward.

Meanwhile, it is desirable that more than one universal controllers (100) utilized as a 3D action controller re-equipped for utilization to additionally execute various control functions within the application program.

Figure 9 is a configuration diagram to generate control signals of the automobiles employing the universal motion controller according to the present invention. As shown in Fig.9, it is desirable that the universal motion controller (100) to generate control signals of automobiles is configured using the implementation examples for the upper part and the lower part shown in Figs .2(b) or (c) and 2(b).

When the lower part of the universal motion controller (100) is configured as Fig.2(b), the wheel encoder part (140-1) equipped on the bottom face of the universal motion controller(100) detects the amount of rotation of the universal motion controller(100) to generate steering action signals to rotate the steering part of the automobile(300),upon rotation of the universal motion controller(100) with the rotation axis(111) equipped on the bottom face of the universal motion controller(100) as the axis.

When the lower part of the universal motion controller(100) is configured as Fig.2(c), the action sensing part (140-2) detects position movement of the universal motion controller(100) equipped on the bottom face of the universal motion controller(100) detects position movement of the universal motion controller(100) to generate steering action signals to rotate the steering part of the automobile(300) if the universal motion controller(100) rotates with the rotation axis(111) equipped on the bottom face of the universal motion controller(100).

Control signal generation of automobiles using action of the configuration equipped in the universal motion controller(100) described below is applied in the same way as in the implementation examples of Figs.2(b) and 2(c).

The wheel drive part "c"(133) generates on/off action signals to turn automobile power on/off according to rotating directions, while the wheel drive part "d"(134) generates advance/stop action signals to activate accelerator or break system of the automobile(300) according to rotating directions.

The wheel drive part "e"(135) generates wiper action signals to control more than one of action or action speed for windshield wipers of the automobile(300) according to rotating directions, while the wheel drive part "f"(136) generates gear shift signals allowing the selection of gear shift in the automobile(300) according to the rotting directions.

The button part "a"(151) generates left direction signals to activate the left direction indicator lamp of the automobile(300),while the button part "b"(161) generates right direction signals to activate the right direction indicator lamp of the automobile(300).

Meanwhile, upon double clicking the button part "a"(151), horn action signals to activate the horn of the automobile are generated, while upon double clicking the button part "b"(161), the drive part of the automobile(300) is initialized according to the direction of the universal motion controller(100). Initialization aligns the direction of the drive part of the automobile(300) to be the same as that of the universal motion controller(100),and it is desirable not to execute initialization in the middle of drive of the automobile(300).

In addition, to usefully employ the function of the universal motion controller(100) the function to activate left/right side direction indicator lamps of the automobile(300) may be equipped through equipping the first universal motion controller with functions such as direction conversion or speed control, etc. and the second universal motion controller with the button part "a" and the button part "b" after separately equipping with the universal motion controllers for left hand and right hand uses.

While the universal motion controller according to Fig. 9 was described with automobiles as an example, the universal motion controllers with the application of the same technical characteristics may also be used in ships, etc. other than automobiles. In the existing motorcycles and electric bicycles, etc., speed and steering devices that used to be controlled by both hands of the user may be replaced for control in a comfortable posture by the steering device of two-wheel vehicles including motorcycles and electric bicycles

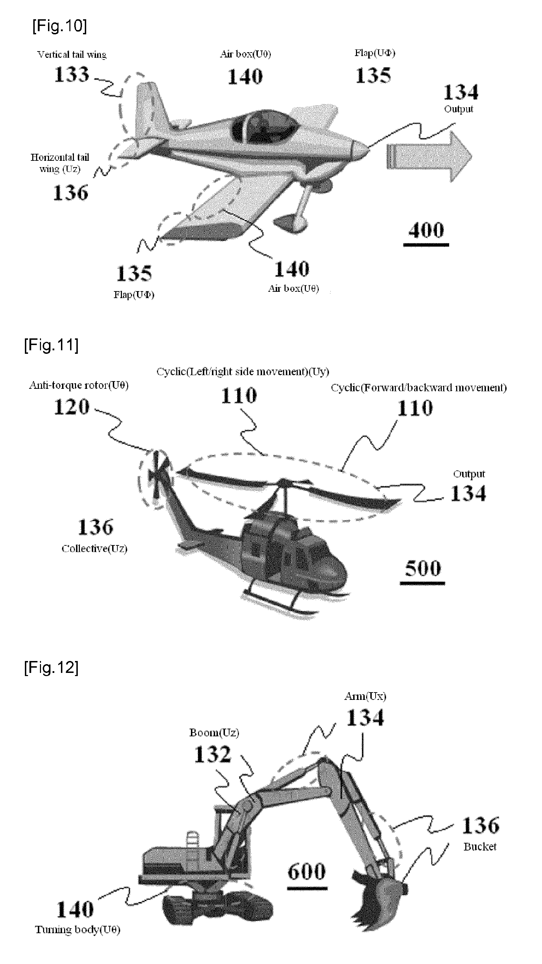

Figure 10 is a configuration diagram to generate control signals of airplanes using the universal motion controller according to the present invention. As shown in Fig. 10, it is desirable that the universal motion controller(100) to generate control signals for airplanes is configured with the use of implementation examples for the upper part and the lower part shown in Figs. 2(b) or (c) and 2(b).

When the lower part of the universal motion controller(100) is configured as Fig. 2(b), the wheel encoder part (140-1) equipped on the bottom face of the universal motion controller(100) detects the amount of rotation of the universal motion controller(100) to generate air box action signals(U$\theta$) to control the air box of the airplane(400), if the universal motion controller (100) rotates with the rotation axis(111) equipped on the bottom face of the universal motion controller (100) as the axis.

When the lower part of the universal motion controller(100) is configured as Fig. 2(c), the action sensing part (140-2) equipped on the bottom face of the universal motion controller detects position movement of the universal motion controller(100) to generate air box action signals($U\theta$) to control the air box of the airplane(400), if the universal motion controller (100) rotates with the rotation axis(111) equipped on the bottom face of the universal motion controller(100) as the axis.

Control signal generation of airplanes using action of the configuration equipped in the universal motion controller (100) described below is applied in the same way as in the implementation examples of Figs.2(b) and 2(c).

The wheel drive part "c" (133) generates vertical tail wing action signals to activate the vertical tail wing of the airplane(400) according to rotating directions, while the wheel drive part "d"(134) generates output increase/reduce signals to increase or reduce the output of the airplane(400) according to rotating directions.

The wheel drive part "e"(135) generates flap action signals($U\theta$) to activate the flap for the airplane(400), while the wheel drive part "f"(136) generates horizontal tail wing action signals($Uz$) to activate the horizontal tail wing of the airplane(400) according to rotating directions.

Other configuration elements equipped in the universal motion controller(100) according to the implementation examples of Fig. 2(b) below may be used to generate command signals to activate other configuration elements of the airplane(400) not described in Fig. 10.

While the universal motion controller according to Fig. 10 was described with airplanes as an example, the universal motion controllers with application of the same technical characteristics may also be used in submarines, etc. other than airplanes.

Figure 11 is a configuration diagram to generate control signals of helicopters using the universal motion controller according to the present invention. As shown in Fig. 11, it is desirable that the universal motion controller(100) to generate control signals for the helicopter(500) is configured with the use of the implementation examples for the upper part and the lower part shown in Figs. 2(a) and 2(b).

The first action sensing part(110) detects position movement of the universal motion controller (100) and generates the first cyclic action signals($Ux$) to advance or back up the helicopter(500) when the universal motion controller (100) moves forward or backward in 2D plane(pad) of X-axis, Y-axis.

Meanwhile, the first action sensing part(110) detects the position movement of the universal motion controller to generate the second cyclic action signals($Uy$) to move the helicopter(500) to the left or right side, when the universal motion controller(100) moves to the left or right direction on X-, Y-axis 2D plane of the bottom face(pad).

The second action sensing part(120) detects rotation movement of the universal motion controller(100) using the position information of the first action sensing part (110) to generate anti-torque rotor action signals($U\theta$) for controlling rotation of the anti-torque rotor of the helicopter(500) when the universal motion controller(100) rotates on X-, Y-axis 2D plane of the bottom face(pad).

The wheel drive part "d"(134) generates output action signals to increase or reduce output of the helicopter according to rotating directions, while the wheel drive part "f"(136) generates collective action signals($Uz$) to ascend or descend the helicopter(500) according to rotating directions.

Other configuration elements equipped in the universal motion controller(100) according to Fig.2(b) below may be used to generate command signals to activate other configuration elements of the helicopter(500) not described in Fig.11.

Figure 12 is a configuration diagram to generate control signals of excavators using the universal motion controller according to the present invention. As shown in Fig. 12, it is desirable that the universal motion controller(100) to generate control signals for the excavator(600) is configured with the use of the implementation examples for the upper part and the lower part shown in Figs. 2(d) or (c) and 3(d).

When the lower part of the universal motion controller(100) is configured as Fig. 2(b), the wheel encoder part (140-1) equipped on the bottom face of the universal motion controller(100) detects the amount of rotation of the universal motion controller(100) to generate swing action signals($U\theta$) to rotate the turning body of the excavator(600) to the left or the right side, if the universal motion controller (100) rotates with the rotation axis(111) equipped on the bottom face of the universal motion controller(100) as the axis.

When the lower part of the universal motion controller(100) is configured as Fig. 2(c), the action sensing part (140-2) equipped on the bottom face of the universal motion controller(100) detects the position movement of the universal motion controller(100) to generate swing action signals($U\theta$) to rotate the turning body of the excavator(600) to the left or the right side, if the universal motion controller (100) rotates with the rotation axis(111) equipped on the bottom face of the universal motion controller(1 00) as the axis.

The wheel drive part"b"(132) generates boom action signals($Uz$) to move the boom of the excavator(600) upwards or downwards according to rotating directions, while the wheel drive part "d" generates arm action signals($Ux$) to execute the actions of stretching forward or pulling the arm of the excavator(600) according to rotating directions.

Also, the wheel drive part "f"(136) generates bucket action signals to move the bucket for the excavator(600) upwards or downwards according to rotating directions.

Other configuration elements equipped in the universal motion controller(100) according to the implementation examples of Fig. 3(d) below may be used to generate command signals to activate other configuration elements of the excavator(600) not described in Fig.12, and it is desirable that command signals for drive control of the excavator(600) according to movement of the excavator(600) have the drive control executed using the universal motion controller for automobiles described in Fig.9.

Although the universal controller according to Fig.12 was described with the excavator as an example, the universal motion controllers applying the same technical characteristics may be used in bulldozer, forklift, crane, tank, etc., as well in addition to the excavator.

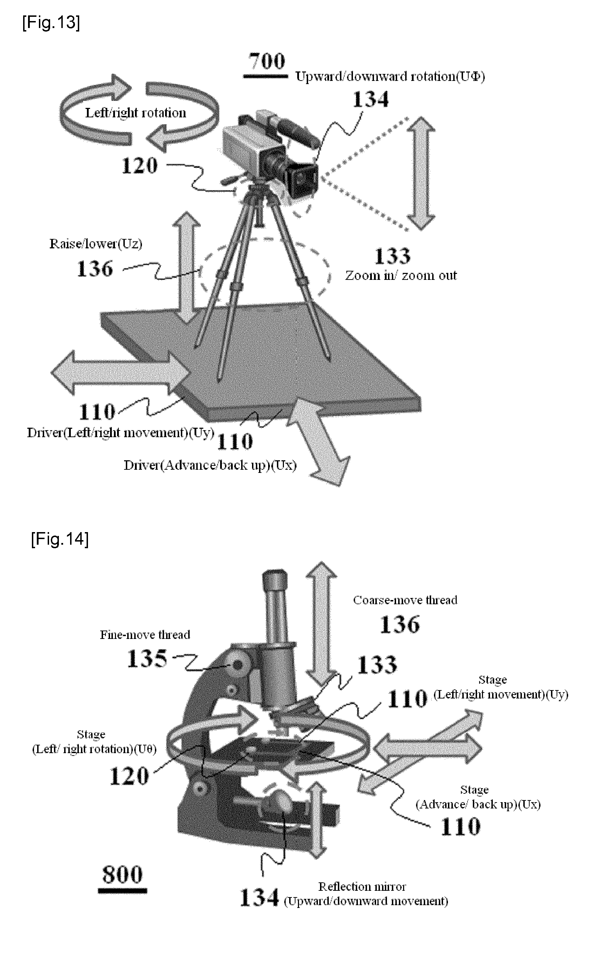

Figure 13 is a configuration diagram to generate control signals of filming devices using the universal motion controller according to the present invention. As shown in Fig. 13, it is desirable that the universal motion controller(100) to generate control signals for the filming device(700) is configured with the use of the implementation examples for the upper part and the lower part shown in Figs. 2(a) and 3(b).

The first action sensing part(110) detects position movement of the universal motion controller (100) and generates the drive action signals(Ux) to advance or back up the driver for filming device(700) when the universal motion controller(100) moves forward or backward in 2D plane(pad) of X-axis, Y-axis.

Meanwhile, the first action sensing part(110) detects position movement of the universal motion controller to generate left/right movement action signals(Ux) to move the driver for the filming device(700) to the left or the right side, when the universal motion controller(100) moves to the left or the right side on X-, Y-axis 2D plane of the bottom face(pad).

The second action sensing part(120) detects rotation movement of the universal motion controller(100) using position information of the first action sensing part(110) to generate left/right rotation action signals(Uθ) for rotation of the camera of the filming device (700) to the left or the right side when the universal motion controller(100) rotates on X-, Y-axis 2D plane of the bottom face(pad).

The wheel drive part "c" (133) generates zoom in or zoom out signals to magnify or shrink the subject filmed by the camera of the filming device(700) according to rotating directions, while the wheel drive part "d" (134) generates up/down rotation action signals (UΦ) to move the camera of the filming device (700) upward or downward according to rotating directions.

The wheel drive part "f"(136) generates up/down movement action signals(Uz) to raise or lower the camera of the filming device(700) according to rotating directions, while the button part "a"(151) generates shutter action signals to activate the shutter of the filming device(700).

Other configuration elements equipped in the universal motion controller(100) according to the implementation examples of Fig. 3(b) below may be used to generate command signals to activate other configuration elements of the filming device(700) not described in Fig.13.

Although the universal controller according to Fig.13 was described with the filming device as an example, the universal motion controllers applying the same technical characteristics may be used in ordnance, astronomical telescope, manless rifle, etc., as well in addition to the filming device.

Figure 14 is a configuration diagram to generate control signals for microscopes using the universal motion controller according to the present invention. As shown in Fig. 14, it is desirable that the universal motion controller(100) to activate the microscope(800) is configured with the use of the implementation examples for the upper part and the lower part shown in Figs. 2(a) and 3(b).

The first action sensing part(110) detects position movement of the universal motion controller (100) and generates drive action signals(Ux) to advance or back up the observation subject placed on the stage of the microscope(800) when the universal motion controller(100) moves forward or backward on X-, Y-axis 2D plane of the bottom face(pad)

Meanwhile, the first action sensing part(110) detects position movement of the universal motion controller to generate left/right movement action signals(Uy) to move the observation subject placed on the stage of the microscope(800) to the left or the right side, when the universal motion controller(100) moves to the left or the right side on X-, Y-axis 2D plane of the bottom face(pad).

The second action sensing part(120) detects rotation movement of the universal motion controller(100) using position information of the first action sensing part (110) to generate left/right rotation action signals(Uθ) to rotate the observation subject placed on the stage of the microscope (800) to the left or the right side when the universal motion controller(100) rotates on X-, Y-axis 2D plane of the bottom face(pad).

The wheel drive part "c" (133) generates objective lens exchange signals to rotate the objective lens rotary plate of the microscope(800) according to rotating directions, while the wheel drive part "d" (134) generates reflection mirror rotation action signals (UΦ) to move the reflection mirror of the microscope(800) upward or downward according to rotating directions.

The wheel drive part "e"(135) generates fine-move thread action signals adjusting the fine-move thread to adjust focus for objective lens set in the microscope(800) according to rotating directions, while the wheel drive part "f"(136) generates coarse-move thread action signals(Uz) adjusting the coarse-move thread to raise or lower the body tube or the stage of the microscope(800) according to rotating directions.

Other configuration elements equipped in the universal motion controller(100) according to the implementation examples of Fig. 3(b) below may be used to generate command signals to activate other configuration elements of the microscope(800) not described in Fig.14.

The universal motion controller(100) employed in various mechanical devices as in Figs. 9 through 14 may easily conduct control of mechanical devices by being mounted on arms rest of user's chair, etc. When conducting control of mechanical devices, the universal motion controller(100) may applied for use with the use of a string that may be hung on the user's neck along with a pad connected to the string.

Furthermore, the universal motion controller(100) used in various mechanical devices as shown in Figs. 9 through 14 may have each function divided into the universal motion controllers for left hand and right hand, respectively for being equipped so that the mechanical device can be controlled with efficient use of both hands depending on user convenience.

Although the present invention has been described with illustration of the desirable implementation examples as considered above, it shall not be limited to the above-mentioned implementation examples and a variety of modifications and revisions may be possible by those with ordinary knowledge in the technological areas that the present invention belongs to within the scope of not deviating from the spirit of the present invention.

**Claims**

1.   The universal motion controller containing two action sensing parts to activate mechanical devices, comprising:

the first action sensing part equipped in one side on the bottom face of the said controller to generate X-axis and Y-axis action signals of 2-dimensional(2D) plane in the said mechanical device;
the second action sensing part equipped in the other side on bottom face of the said controller to generate rotation signals of 2D plane along with action signal of the said first action sensing part in the said mechanical device;
more than one wheel operation part to generate action signals capable of controlling
more than one configuration element contained in the said mechanical device; the button part "a" to generate the first selection signal executing the first function selected by the user; and
the button part "b" to generate the second selection signal executing the second function selected by the said user.

2.   The universal motion controller of claim 1, further comprising:

an interface part to transmit command signals generated from each configuration part of the said controller to outside; and
a power supply part to supply power to the said controller.

3.   The universal motion controller of claim 1, wherein
the said first action sensing part and the second action sensing part are **characterized by** being a reflective photo interrupter.

4.   The universal motion controller of claim 1, wherein
the said first action sensing part and the second action sensing part are **characterized by** being mutually positioned on a straight line and each action sensing part and being removed by a given distance to calculate a rotation angle of the said controller.

5.   The universal motion controller of claim 4, wherein
calculation of the said rotation angle is **characterized by** using the second coordinate values inputted with recognition by the said first action sensing part and the second action sensing part after movement of the first coordinate values and the said controller following recognition by the said action sensing part and the second action sensing part corresponding to the position of the said controller.

6.   The universal motion controller of claim 2, wherein
the external power supply is **characterized by** being supplied through the said cable when the said interface part is one of the cable or wireless means and the said power supply part is configured as the cable mentioned above, and the power supply by being supplied using batteries when the said interface part is configured as the wireless means mentioned above.

7. The universal motion controller of claim 1, wherein
vibration prevention parts formed as an elastic body to absorb vibration of the said mechanical device on a bottom face of the said controller are **characterized by** more than one of them being equipped, and the said vibration prevention part by being formed with a material to prevent sliding.

8. The universal motion controller of claim 1, wherein
a magnet is **characterized by** being contained inside the said controller, and the said magnet by being able to prevent fine motion of the said controller due to vibration of the said mechanical device through being tightly attached to the metal component of the bottom face on which the said controller is positioned.

9. The universal motion controller of claim 1, wherein
more than one of the said wheel operation parts are **characterized by** comprising more than one of lateral or longitudinal position of each of the said wheel-operation parts depending on user convenience.

10. The universal motion controller containing one rotation sensing part to activate the mechanical device, comprising:

the rotation axis positioned in one side on the bottom face of the said controller so as to enable rotation of the said controller by connection through the vertical axis to a plane with the said controller positioned on;
the rotation sensing part to detect an amount of rotation of the said controller and generate rotation signals of 2D plane in the said mechanical device;
more than one wheel operation parts to generate action signals capable of controlling more than one configuration element included in the said mechanical device; the button part "a" to generate the first selection signal executing the first function selected by the user; and
the button part "b" to generate the second selection signal executing the second function selected by the user.

11. The universal motion controller of claim 10, wherein
the said rotation sensing part is **characterized by** comprising either one of the wheel encoder part that is combined with the said rotation axis and positioned on a bottom face of the said controller so that the said controller may be rotated in the plane on which the said controller is positioned, or the action sensing part that is positioned on the other side of a bottom face of the said controller rotated by the said rotation axis and aimed at generating rotation signals of the 2D plane in the said mechanical device by measuring values of coordinate move of the said controller.

12. The universal motion controller of claim 11, wherein
the said wheel encoder part is **characterized by** comprising:

a wheel action part combined with the said rotation axis so that the said controller may rotate in 2D plane around the said rotation axis; and
the encoder to measure rotation angles of the said controller by sensing the amount of rotation of the said wheel action part.

13. The universal motion controller of claim 12, wherein
the said encoder is **characterized by** being one of optical, variable resistance-type or mechanical-type encoders.

14. The universal motion controller of claim 11, wherein
the said action sensing part is **characterized by** being a reflective photo interrupter.

15. The universal motion controller of claim 11, wherein
the said rotation axis and the action sensing part that are **characterized by** being mutually positioned on a straight line, and the said rotation axis and the action sensing part by being removed by a given distance to calculate a rotation angle of the said controller.

16. The universal motion controller of claim 15, wherein
calculation of the said rotation angle is **characterized by** using the first coordinate values inputted with recognition by the action sensing part before rotation of the said controller and the second coordinate values inputted with recognition by the said action sensing part after rotation of the said controller corresponding to the said rotation axis.

**17.** The universal motion controller of claim 10, further comprising:

an interface part to transmit the command signal generated from each configuration part of the said controller to outside; and

the power supply part to supply power to the said controller.

**18.** The universal motion controller of claim 17, wherein
the external power supply is **characterized by** being supplied through the said cable when the said interface part is one of cable or wireless means and the said power supply part comprises the said cable configuration and the power by being supplied using batteries when the said interface part comprises the said wireless means.

**19.** The universal motion controller of claim 10, wherein
vibration prevention parts formed as an elastic body to absorb vibration of the said mechanical device on a bottom face of the said controller are **characterized by** being equipped with more than one of them, and the said vibration prevention part by being formed with a material to prevent sliding.

**20.** The universal motion controller of claim 10, wherein
a magnet is **characterized by** comprising inside of the said controller, and the said magnet by being able to prevent fine motion of the said controller due to vibration of the said mechanical device through being tightly attached to the metal component of the bottom face on which the said controller is positioned.

**21.** The universal motion controller of claim 10, wherein
more than one of the said wheel operation parts are **characterized by** comprising more than one of lateral or longitudinal position of each of the said wheel operation parts depending on user convenience.

**22.** The universal motion controller for automobile operation control in automobiles employing the controller of claim 10 comprising:

a rotation sensing part to generate steering action signals to rotate the steering part of the said automobile using the said amount of rotation after measuring an amount of rotation for the said controller;
the wheel operation part "c" to generate on/off action signals to turn on/off power for the said automobile according to rotating directions;
the wheel operation part "d" to generate advance action signals or stop action signals to activate accelerator or break system of the said automobile according to rotating directions;
the wheel operation part "e" to generate wiper action signals to control more than one of action or action speed of windshield wiper for the said automobile according to rotating directions;
the wheel operation part "f" to generate gear shift signals to allow selection of gear shift for the said automobile according to rotating directions;
the button part "a" to generate left side direction signals to activate the left side direction indicator lamp for the said automobile;
the button part "b" to generate right side direction signals to activate the right side direction indicator lamp for the said automobile.

**23.** The universal motion controller of claim 22 for automobile operation control, wherein horn action signals are **characterized by** being generated to activate the horn when the said button part "a" is double clicked.

**24.** The universal motion controller of claim 22 for automobile operation control, wherein an operation part for the said automobile is **characterized by** initialization according to the direction of the said controller when the said button part "b" is clicked.

**25.** The universal motion controller in airplanes employing the controller of claim 10, comprising:

a rotation sensing part to generate air box action signals to control air box of the said airplane using the said amount of rotation after measuring an amount of rotation for the said controller;
the wheel operation part "c" to generate vertical tail wing action signals to activate a vertical tail wing for the said airplane according to rotating directions;
the wheel operation part "d" to output increase signals or output reduction signals to increase or reduce power for the said airplane according to rotating directions;

the wheel operation part "e" to generate flap action signals to activate a flap for the said airplane according to rotating directions;

the wheel operation part "f" to generate horizontal tail wing action signals to activate a horizontal tail wing for the said airplane according to rotating directions.

26. The universal motion controller in helicopters employing the controller of claim 1, comprising:

an universal motion controller for helicopter drive control configured with inclusion of the first action sensing part to generate the first cyclic action signals to advance or back up the helicopter by detecting position movement of the said controller when the said controller moves forward or backward in 2D of X-axis, Y-axis;

the second action sensing part to generate anti-torque rotor action signals to control rotation of an anti-torque rotor for the said helicopter by detecting rotation movement of the said controller using position information of the first action sensing part when the said controller rotates in 2D of X-axis, Y-axis;

the wheel operation part "d" to generate output action signals to increase or reduce power for the said helicopter according to rotating directions; and

the wheel operation part "f" to generate collective action signals to ascend or descend the said helicopter according to rotating directions.

27. The universal motion controller for helicopter operation controls of claim 26, wherein the second cyclic action signals are **characterized by** being generated to move the said helicopter to the left or the right side by the said first action sensing part detecting position movement of the said controller when the said controller moves to the left or the right side in 2D of the said X-axis and Y-axis.

28. The universal motion controller for excavator action controls of claim 10, comprising:

a rotation sensing part to generate swing action signals to rotate a turning body of the said excavator to the left or the right side using the said amount of rotation after measuring an amount of rotation of the said controller;

the wheel operation part "b" to generate arm action signals to conduct actions of stretching or pulling an arm of the said excavator according to rotating directions;

the wheel operation part "d" to generate bucket action signals to move a bucket of the said excavator upward or downward according to rotating directions; and

the wheel operation part "f" to generate boom action signals to move a boom of the said excavator according to rotating directions.

29. The universal motion controller for filming device action controls of claim 1, comprising:

the first action sensing part to generate drive action signals to move a driver of the said filming device forward or backward by detecting position movement of the said controller when the said controller moves forward or backward in 2D of X-axis, Y-axis;

the second action sensing part to generate left/right rotation action signals to rotate a camera of the said filming device to the left or the right side by detecting rotation movement of the said controller using position information of the first action sensing part when the said controller rotates in 2D of X-axis, Y-axis;

the wheel operation part "c" to generate zoom in or zoom out action signals to magnify or shrink the subject filmed by the said camera according to rotating directions;

the wheel operation part "d" to generate up/down rotation action signals to rotate the said camera upward or downward according to rotating directions;

the wheel operation part "f" to generate up/down movement action signals to raise or lower the said camera according to rotating directions; and

the button part "a" to generate shutter action signals to activate a shutter of the said filming device.

30. The universal motion controller for filming device control of claim 29, wherein left/right movement action signals are **characterized by** being generated to move the said filming device to the left or the right side by detecting position movement of the said controller with the said first action sensing part when the said controller moves to the left or the right side direction in 2D of the said x-axis and Y-axis.

31. The universal motion controller for microscope action control of claim 1, comprising:

the first action sensing part to generate drive action signals to advance or back up an observation subject placed on a stage of the said microscope by detecting position movement of the said controller when the said controller moves forward or backward in 2D of X-axis, Y-axis;

the second action sensing part to generate left/right rotation action signals to rotate the observation subject placed on the stage of the said microscope to the left or the right side by detecting rotation movement of the said controller when the said controller rotates in 2D of X-axis, Y-axis;

the wheel operation part "c" to generate objective lens exchange signals to rotate an objective lens rotary plate of the said microscope according to rotating directions;

the wheel operation part "d" to generate reflection mirror rotation action signals to rotate a reflection mirror of the said microscope upward or downward according to rotating directions;

the wheel operation part "e" to generate fine-move thread action signals adjusting a fine-move screw to adjust focus of the objective lens set in the said microscope according to rotating directions; and

the wheel operation part "f" to generate coarse-move thread action signals adjusting a coarse-move screw to raise or lower on of a body tube of the said microscope or the said stage according to rotating directions.

**32.** The universal motion controller for microscope action control of claim 31, wherein the left/right movement action signals are **characterized by** being generated to move the said observation subject to the left or the right side by detecting position movement of the said controller with the said first action sensing part when the said controller moves to the left or the right side in 2D of the said X-axis, Y-axis.

**33.** The universal motion controller for 3D action control of claim 1, comprising:

the first action sensing part to generate front/rear action signals of the cursor displayed in response to the motion of the said 3D action controller when the said controller moves forward or backward in 2D plane of x-axis, Y-axis;

the second action sensing part to generate Z-axis rotation signals to rotate 3D graphic around Z-axis at the place where the said cursor is positioned in the screen displayed after detecting rotation movement of the said controller using position information of the first action sensing part when the said controller rotates in the 2D plane of X-axis, Y-axis;

the wheel operation part "a" to generate Y-axis slope signals to rotate the 3D graphic around Y-axis at the place where the said cursor is positioned in the said screen displayed according to rotating directions;

the second wheel operation part to generate Z-axis movement signals to move the 3D graphic upward or downward in Z-axis direction at the place where the said cursor is positioned in the said screen displayed according to rotating directions;

the wheel operation part "c" to generate zoom in or zoom out signals to magnify or shrink the said screen displayed according to rotating directions;

the wheel operation part "d" to generate X-axis slope signals to rotate the 3D graphic around X-axis at the place where the said cursor is positioned in the said screen displayed according to rotating directions.

**34.** The universal motion controller for the 3D action controls of claim 33, wherein the said first through wheel operation part "d" is **characterized by** being used in 3D graphic environment.

**35.** The universal motion controller for the 3D action controls of claim 34, wherein
the said wheel operation part "a" is **characterized by** generating left/right scroll signals to scroll to the left or the right side of the said screen displayed according to rotating directions when the said first through wheel operation part "d" are used in 2D graphic environment,
the said wheel operation part "b" by generating up/down scroll signals to scroll upward or downward the said screen displayed according to rotating directions, the said wheel operation "c" to generate left/right menu movement signals to move to the left or the right side a menu selection of the said screen displayed according to rotating directions,
the said wheel operation "d" by generating up/down menu movement signals to move upward or downward the said menu selection of the said screen displayed according to rotating directions.

EP 2 701 039 A2

[Fig.1]

(a)

(b)

[Fig.2]

(a)

(b)

(c)

18

[Fig.3]

133 134 135

132                  136

131              137

151  161

(a)

133 134 135

136

151  161

(b)

133 134 135

132

151  161

(c)

133 134 135

132              136

151  161

(d)

[Fig.4]

Universal motion controller — **100**

The first action sensing part (Ux, Uy) — **110**

The second action sensing part (Uθ) — **120**

Wheel drive part "a" — **131**

**170**

Interface part

⋮

Wheel drive part "n"

Power supply part

Button part "a"(ULB) — **13n**

**151**

**180**

Button part "b"(URB) — **161**

**200** **210**

Mechanical device

Input signal control part

Display

**220**

[Fig.5]

[Fig.6]

[Fig.7]

[Fig.8]

(a)

(b)

[Fig.9]

135 Wiper

136 Gear shift

134 Brake

300

133 Automobile(Start or stop)

Steering part(Uθ)

111

Left side signal (ULB)

151

134 Accelerator

Right side signal (URB)

161

[Fig.10]

Vertical tail wing
**133**

Air box(Uθ)
**140**

Flap(UΦ)
**135**

**134**
Output

Horizontal tail wing (Uz)
**136**

**135**
Flap(UΦ)

**140**
Air box(Uθ)

**400**

[Fig.11]

Anti-torque rotor(Uθ)
**120**

Cyclic(Left/right side movement)(Uy)
**110**

Cyclic(Forward/backward movement)
**110**

Output
**134**

**136**
Collective(Uz)

**500**

[Fig.12]

Arm(Ux)
**134**

Boom(Uz)
**132**

**136**
Bucket

**600**

**140**
Turning body(Uθ)

[Fig.13]

**700** Upward/downward rotation(UΦ)
**134**

Left/right rotation

**120**

Raise/lower(Uz)
**136**

**133**
Zoom in/ zoom out

**110**
Driver(Left/right movement)(Uy) **110**
Driver(Advance/back up)(Ux)

[Fig.14]

Coarse-move thread
**136**

Fine-move thread
**135**

**133**

Stage
(Left/right movement)(Uy)
**110**

Stage
(Left/ right rotation)(Uθ)
**120**

Stage
(Advance/ back up)(Ux)
**110**

**800**

Reflection mirror
**134** (Upward/downward movement)